# EUROPEAN PATENT APPLICATION

(11) **EP 2 053 504 A1**
(43) Date of publication of application: **29.04.2009**
(21) Application number: 07290993.0
(22) Date of filing: 09.08.2007
(51) Int. Cl.: G06F 9/445

(54) **System and method for managing processing resources**

(71) Applicant: FRANCE TELECOM, 75015 Paris (FR)
(72) Inventor: Wahab, Tarek France Telecom, 75015 Paris (FR); Saleem, Omer France Telecom, 75015 Paris (FR); Chaudhry, Kashif France Telecom, 75015 Paris (FR)
(74) Representative: McCann, Heather Alison

(57) **Abstract**

Embodiments of the invention are concerned with accessing, repairing and/or replacing and/or upgrading firmware and/or software on devices such as wireless devices. :

More specifically, embodiments of the invention provide a computer-implemented framework for managing software resources processable by a terminal, the terminal being arranged to hold software resources data indicative of a plurality of first type of software resources, a plurality of a second type of software resources and one or more application programming interfaces (API), each said software resource being stored by the terminal such that any given first type of software resource is accessible by a given second type of software component via an API corresponding thereto, wherein the terminal is capable of communicating with devices via a communications network, the framework comprising:
an interface for receiving a first request during processing of a first type of software resource by the terminal, said first request being received from said first type of software resource;
a query component arranged to access the software resources data so as to identify a second type of software resource corresponding to the first request;
resource management means arranged to transmit a second request for a second type of software resource to a device in the communications network and to update said software resources data in response to receipt thereof,

wherein, responsive to the query component indicating absence of a second type of software resource corresponding to the first request, the framework is arranged to transmit a second request for a software resource to a device in the communications network and to update the software resources data held by said terminal in response to receipt of a response message comprising the requested software resource.

## Description

### Field of the Invention

The present invention relates to a system and method for managing processing resources and is particularly, but not exclusively, suitable for accessing and/or updating firmware, software components and application files on terminals such as mobile terminals.

### Background of the Invention

As is well known in the art, computing terminals have different capabilities and features based on the applications installed thereon. A terminal can be configured with firmware and application data pre-purchase and/or can be updated, post-purchase, via a storage medium such as a magnetic or an optical disk or via a computer network. Mobile devices, unlike their wired counterparts, are further constrained by processing and storage resources and the limited availability of power, and of course downloading of data to mobile devices over a network is metered and dependent on bandwidth availability.

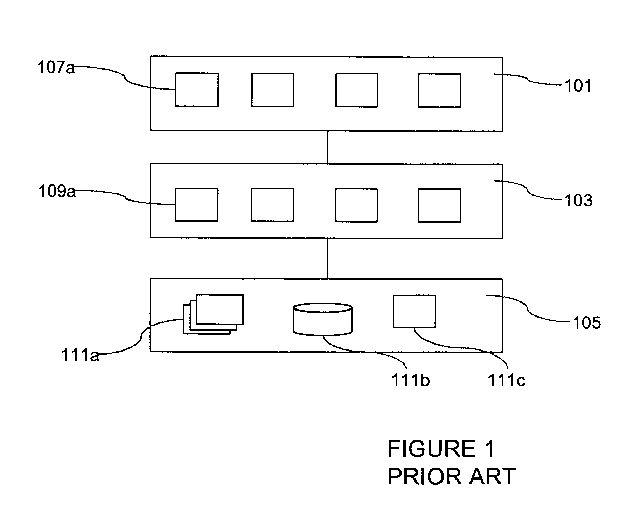

Systems and methods for repairing and upgrading software on wireless devices have conventionally dealt with updates to firmware and application data in a monolithic, rather than componentized, manner, making it difficult to support component-specific upgrades. However, there is a general trend towards provisioning applications as a bundle of components such as is shown in Figure 1: the bundle comprises an application 107a, a device API 109a corresponding to the application 107a and one or more plugins 111a. Each plugin relates to a particular service, or function, that the application 107a can provide. Thus for the user to be able to select from the entire range of services available from the application 107a, the plugins 111a have to be downloaded with the application 107a. A method of updating a device to include bundles in this manner is described in US7242929. Alternatively the new service has to be configured with explicit knowledge of the APIs / plugins that are on the device. In the case where the plugin or API is not part of the installation file for the application or is not already present on the device, the application will fail on installation or execution because there is no direct mechanism to install plugins that are not part of the installation file. Furthermore, there is no way of managing these plugins i.e. identifying when a plugin is no longer required and uninstalling it.

There is therefore a need for a more flexible mechanism for managing application and firmware resources on computing devices.

### Summary of the Invention

In accordance with a first aspect the present invention there is provided a computer-implemented framework for managing software resources processable by a terminal, the terminal being arranged to hold software resources data indicative of a plurality of first type of software resources, a plurality of a second type of software resources and one or more application programming interfaces (API), each said software resource being stored by the terminal such that any given first type of software resource is accessible by a given second type of software component via an API corresponding thereto, wherein the terminal is capable of communicating with devices via a communications network, the framework comprising:
an interface for receiving a first request during processing of a first type of software resource by the terminal, said first request being received from said first type of software resource;
a query component arranged to access the software resources data so as to identify a second type of software resource corresponding to the first request;
resource management means arranged to transmit a second request for a second type of software resource to a device in the communications network and to update said software resources data in response to receipt thereof,
wherein, responsive to the query component indicating absence of a second type of software resource corresponding to the first request, the framework is arranged to transmit a second request for a software resource to a device in the communications network and to update the software resources data held by said terminal in response to receipt of a response message comprising the requested software resource.

Advantageously, a framework according to embodiments of the invention provides the ability to automatically download and manage application plugins and APIs. This retrieval of plugins and APIs is dependent on requests received from an application that has been previously installed on the device, but for which a complete repository of plugins corresponding to the services that can be invoked from the application by an end user is not required at the time of selecting a particular service. This means that applications, more specifically the services that are selectable from a given application, can be decoupled from native device APIs and from updates to the applications (in the form of plugins). This is particularly beneficial for applications that ostensibly offer access to a wide range of services, many of which are executed via a plugin rather than being part of a monolithic application, and only some of which will ever be selected by the end user/ terminal. More specifically, embodiments of the invention provision software resources "on demand" and thus only occupy memory and fixed storage in the event that the service is actually utilised.

Conveniently the second request comprises data identifying one or both of operating system components and/or terminal type, thereby enabling the network device to locate the plugin that matches the operating constraints of the terminal.

In one arrangement the resource management means is arranged to validate the received second type of software resource prior to storing thereof by the terminal; when the first request (i.e. the request received from the first type of software resource) includes identification of the API associated with the required plugin, validation can involve comparing an API corresponding to the second type of software resource with the API contained within the first request. In the case of the second resource being a plugin, the framework can instantiate the plugin and thereby facilitate further processing of the first software component once the plugin has been validated. These steps are performed without in the background, i.e. without requiring any interaction on the part of the user, and thereby provide a means of seamlessly upgrading the terminal's functionality.

In another aspect of the invention the framework is arranged to manage terminal resources, for example by modifying the software resources held by the terminal in the event that usage of a given second type of software component is determined to fall below a predetermined threshold. This modification can involve configuring allocation of memory resources associated with the terminal, and can, for example, occur in conjunction with said instantiation of the second type of software component (e.g. plugin). Alternatively the modification can involve deleting a second type of software component from the software resources data held by the terminal. For example, plugins that have previously been stored by the terminal, but that have been unused for a predetermined period of time, can be deleted when the plugin retrieved in response to the first request is received.

The first type of software component can comprise an application invoked by a content and/or application rendering engine, such as a browser or Flash^{(™)} application. In such cases the framework is in operative association with a third type of software component that is configured to provide access to said API data via said framework. Alternatively the first type of software resource can comprise a software resource having direct access to operating system resources associated with the terminal. Thus the framework provides a means of dynamically updating the functionality associated with native applications and applications that are invoked within rendering engines such as browsers.

In addition, the framework can receive and install software components of the first type, i.e. native applications and widgets and the like.

According to another aspect of the present invention there is provided a method of managing software resources processable by a terminal corresponding to the functionality set out above; additionally there is provided a computer program adapted to perform the method when run on a terminal or when distributed between a suite of terminals.

Further features and advantages of the invention will become apparent from the following description of preferred embodiments of the invention, given by way of example only, which is made with reference to the accompanying drawings.

### Brief Description of the Drawings

Figure 1 is a schematic diagram showing a representation of conventionally arranged software components;
Figure 2 is a schematic diagram showing a communications network within which embodiments of the invention can operate;
Figure 3 is a schematic diagram showing components of a mobile device shown in Figure 2 according to an embodiment of the invention;
Figure 4 is a schematic diagram showing a representation of software components arranged according to an embodiment of the invention;
Figure 5 is a flow diagram showing steps involved in updating the mobile device shown in Figure 3 to include a requested software component according to an embodiment of the invention; and
Figures 6a - 6d are flow diagrams showing the steps involved in managing device resources according to another embodiment of the invention.

In the Figures, parts and steps are labelled with reference numerals so as to aid description of the invention; those parts that are shown in more than one Figure are consistently labelled with whichever label was first assigned thereto.

### Detailed Description of the Invention

As described above, embodiments of the invention are concerned with providing an improved and flexible means for updating and installing componentised software applications. As shown in Figure 1, these components can be represented as residing within layers, the layers comprising an application layer 101, a device API layer 103 including application-specific plugins 109a, and an operating system layer 105, including file system components 111a, 111b, 111c. The operating system 105 controls storage and access to the various components associated with the other layers 101, 103. Each of the various APIs is typically associated with one or more of the applications 107a and provides access to data stored on the device so as to deliver a requested service from the application 107a. The application 107a could comprise a widget invoked from a browser running on the device (which ordinarily cannot directly access data at the device API layer 103 or at the operating system layer 105); alternatively the application 107a can be embodied as an application that can communicate directly with these layers 103, 105. The latter type of application is commonly referred to as a native application.

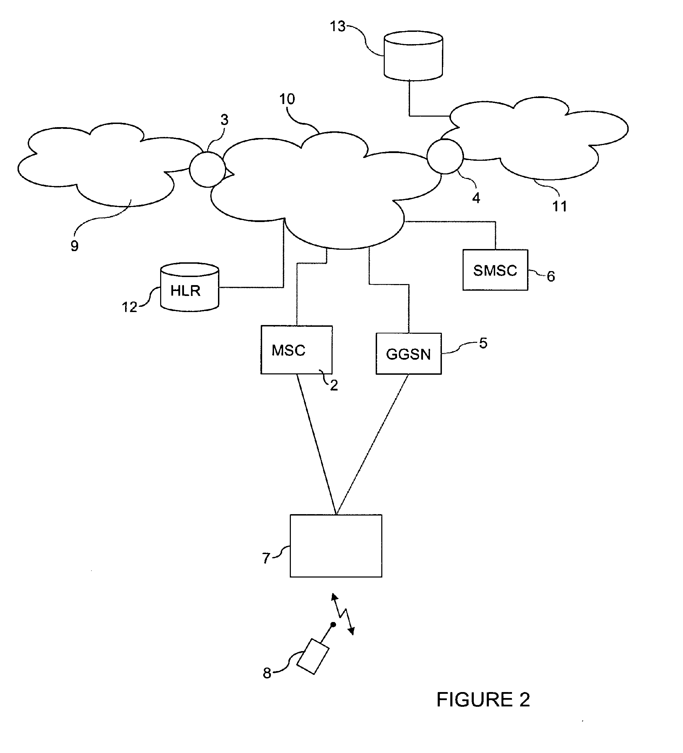

Componentized software components can be distributed to fixed and wireless devices, and while embodiments of the invention are equally applicable to fixed or wireless devices, a first embodiment of the invention will be described in relation to a wireless device. Figure 2 shows a largely conventional arrangement of a mobile communications network 10 within which a device 8 configured according to an embodiment of the invention operates. The mobile network 10 can be any cellular, broadcast, or wide area network. Examples of cellular network technologies include but are not limited to GSM (Global System for Mobile communication), WCDMA (Wideband CDMA), CDMA (Code Division Multiple Access), GPRS (General Packet Radio Service), UTRAN (UMTS Radio Access Network), UMTS (Universal Mobile Telecommunications System), MBMS (Multicast Broadcast Multimedia System). The communication network 10 may also be connected to a public switched telephone network (PSTN 9) and can provide generic Internet access using any transport methods via gateways 3, 4. The communications network can be also a combination of different communication network technologies 9, 10, 11.

The exemplary GSM communications network 10 of Figure 1 comprises a mobile switching centre (MSC) 2 and a gateway GPRS support node (GGSN) 5, which are connected via communications links to a number of base station controllers (BSCs) 7. Each BSC 7 controls one or more base transceiver stations (not shown) located remote from, and connected by further communications links to, the BSC. Each base transceiver transmits radio signals to, and receives radio signals from, the mobile station 8, which is in an area served by that transceiver. The mobile network 10 is provided with a home location register (HLR) 12 which is a database storing subscriber authentication data, and the MSC 2 is provided with a visitor location register (VLR) which is a database temporarily storing subscriber authentication data for mobile stations active in its area. Subscribers of the network 10 may originate or receive multimedia, video, voice, data or fax calls or sessions, or short messages using the Short Message Service (SMS) via SMSC 6, and data packets via a Serving GPRS Support Node (SGSN; not shown). Signalling and data in respect of services provided to mobile the station 8 are routed via MSC 2 for voice and messaging services and via the GGSN 5 for packetised data services.

The mobile terminal 8 may be a mobile phone, a personal digital assistant (PDA), a multimedia computer, a personal computer, a lap top, etc., or generally any terminal capable of accessing services, such as content download, web browsing, streaming, Wireless Application Protocol (WAP) browsing, voice and messaging. In the case of the mobile network 10 being embodied as a GSM or WCDMA network, the terminal is a mobile phone with GSM or WCDMA functionalities. Figure 2 also shows a component repository 13, which holds plugin and API data, indexed by device, operating system and preferably device model number. The repository 13 can be accessed via an SMS sent from the terminal 8 or via a TCP/IP connection therewith; in the case of the latter the repository 13 is preferably accessible via a web server (not shown), in which case the mobile device 8 and the repository 13 can conveniently communicate according to the Hyper Text Transfer Protocol (HTTP).

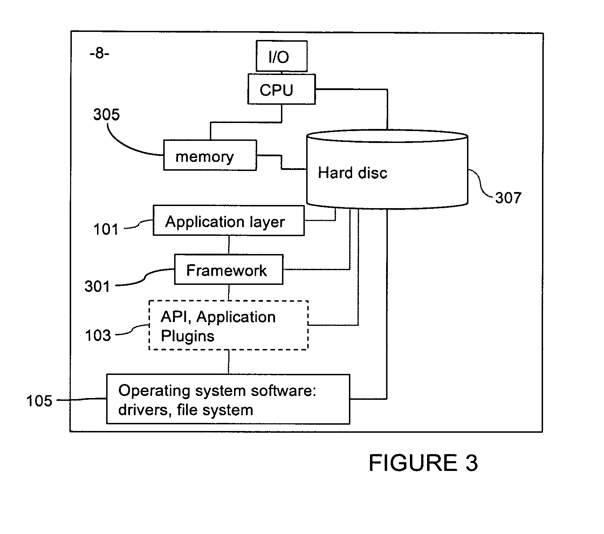

A mobile device 8 configured according to an embodiment of the invention comprises conventional components including a keypad and display screen, a loudspeaker, a microphone, a smart card reader of known type for interacting with a removable or non-removable SIM or a UICC. Turning to Figure 3, the mobile device 8 additionally comprises a processor CPU, memory 305, an input/output interface for sending and receiving data over a radio link, and fixed storage 307 from which application software components 101 and operating system software 105 can be loaded into memory 305. The application software components 101 include various standard software applications such as a browser (as described above) and native applications. In addition the mobile terminal 8 comprises a framework 301 according to an embodiment of the invention; the framework 301 is logically positioned between the application layer 101 and the operating system layer 105, thereby controlling access to operating system components, and controls installation of and access to various APIs and application plugins 103, as will be described in more detail below.

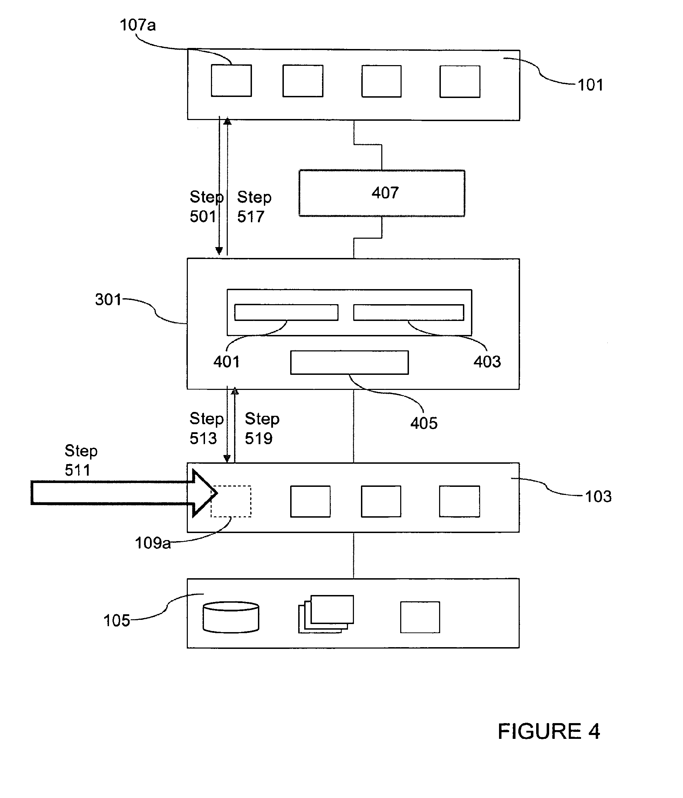

As is known in the art, a content and application rendering engine such as a web browser is restricted in terms of its access to locally stored data, and as a result ordinarily does not have access to either the API layer 103 or the operating system layer 105. This is primarily due to the fact that browsers provide a means for accessing, and being accessed by, remote terminals, and thus present security risks. Turning to Figure 4, for mobile devices that include such rendering engines, the device 8 additionally comprises a bespoke plugin 407 which links the browser - and thus browser applications - to the API layer 103 and operating system layer 105 under control of the framework 301. This plugin 407 can provide a similar function for other rendering engines such as Flash^{(™)} players.

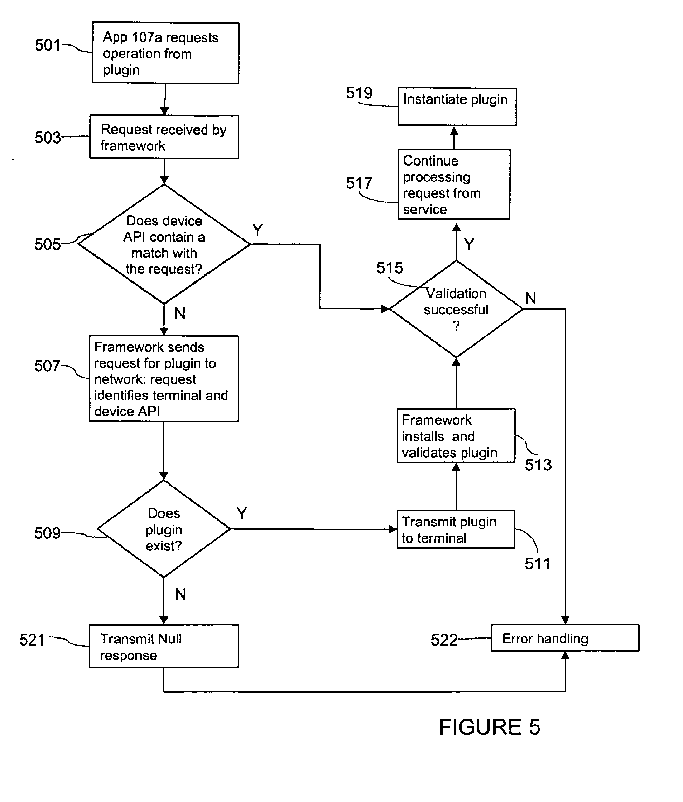

Figure 4 shows the functional parts of framework 301, these being a communications module 401, a validation module 403 and a dynamic library manager 405. The dynamic library manager 405 comprises a plurality of dynamic link libraries (DLL) and enables the framework 301 to communicate with both the application layer 101 and the API layer 103 so as to enable plugins to be dynamically loaded and utilised. The dynamic library manager 405 is responsive to request messages received from an application 107a (labelled as step 501, to be described with reference to Figure 5 below) so as to retrieve and instantiate plugins identified within a given request message. This process involves an initial discovery phase, in which the framework 301 searches for the requested plugin (these being discoverable by the framework 301 via the APIs at layer 103); in the event that the plugin is not held by the device 8, the communications module 401 is triggered to request the plugin from the remote repository 13. Preferably the communications module 401 is arranged to send the plugin request in the form of IP packets, e.g. using the Hyper Text Transport Protocol (HTTP) or other TCP/IP or UDP mechanism. Once the requested plugin is available to the device, the validation module 403 performs a validation process (to be described below), and successful validation results in instantiation of the plugin and continued processing of the application 107a. This process of requesting, receiving, validating and instantiating a plugin occurs in the background, which is to say that the process is not visible to the user of the terminal 8.

In addition to plugins, the communications module 401 can be triggered to request updates to APIs held at the API layer 103 and updates to applications held at the application layer 101 (such as application 107a), be they a native application or a browser or a Flash^{(™)} application. These updates can alternatively be pushed to the device 8 from the repository 13. In addition to updating existing applications, newly developed applications and APIs can be delivered to the terminal 8. Furthermore, since the framework 301 is preferably embodied as a self-contained application, it can receive and install upgrades thereto from the repository 13 or other remote updating system.

The dynamic library module 405 is additionally arranged to manage the components stored within API layer 103, which, for example, can involve deleting a plugin if it has not been accessed for a specified period of time and/or according to a specified amount of usage and/or according to a required amount of memory. The dynamic library module 405 can also move plugins such that they are loaded into memory other than memory 305 of the device 8 (e.g. to SIM card memory). To this end the dynamic library module 405 comprises means for monitoring usage of plugins and application APIs and for maintaining a record of this usage in memory. The record can reviewed by the module 405 periodically and/or when a plugin is downloaded in response to a request from application 107a. Such a periodic review would be appropriate in the event that available memory and/or fixed storage are limited.

Turning to Figure 5, the steps involved in downloading and installing a plugin will now be described. At step 501 the user selects a service associated with the application 107a; assuming the functionality of requested service to be associated with a plugin rather than with the application itself, the application 107a sends a message identifying the plugin to the framework 301 (step 503), whereupon the module 405 inspects the plugins associated with the requesting application via the corresponding API (that is to say the API corresponding to the requesting application 107a (step 505)). In the event that the requested plugin is available on the device 8, the validation module 403 is triggered to validate the plugin, as will be described below. If not, the communications module 401 is triggered to send an HTTP request to a web server associated with the repository 13 (step 507). The request includes data identifying the plugin and the terminal 8, for example listing one or more of the operating system, the device type and model of the device 8. For example, in the event that the terminal is a Series 60 Nokia phone and model N95 running the Symbian^{(™)} Operating System, the communications module 401 creates a request message using XML (or other suitable structured language) identifying these three characteristics of the requesting device.

The request is received by the repository 13 at step 509; assuming the plugin to exist having parameters that match those specified in the request message, the plugin 109a is retrieved and transmitted to the communications module 401, again via HTTP (step 511). The communications module 401 then triggers the validation module 403 to install the plugin and perform a series of checks, each designed to confirm that the plugin a) corresponds to that requested at step 501 and b) can be processed by the terminal 8 (i.e. that it matches the operating system components 105 of the terminal 8). Check a) involves the validation module 403 querying the downloaded plugin for its API and comparing this with the API associated with the requesting application and identified as part of step 505. Optionally, check b) can involve the framework 301 performing various memory checks so as to ensure that the device 8 has sufficient memory for the plugin to execute. To this end the validation module 403 can identify memory requirements associated with the plugin, compare these with the available memory, and in the event that there is an insufficient amount of available memory, review the record of plugin usage maintained by the framework 301. In one arrangement the framework 301 deletes those plugins that have not been used for a specified period of time, and/or that have memory requirements exceeding a specified threshold, in order to ensure that the downloaded plugin 109a can execute successfully. These validation processes are indicated in Figure 5 by step 513.

In the event that the validation is unsuccessful or the repository 13 does not have a plugin corresponding to the request received at step 507, the terminal displays an error message to the user (steps 521, 522); otherwise, and as stated above, the process of installation and validation proceeds in the background under control of the framework 301 and the only notification that the user receives is an indication that the application 107a is processing the requested service - this being instantiation of the received plugin 109a by the framework 301, as shown at steps 517, 519.

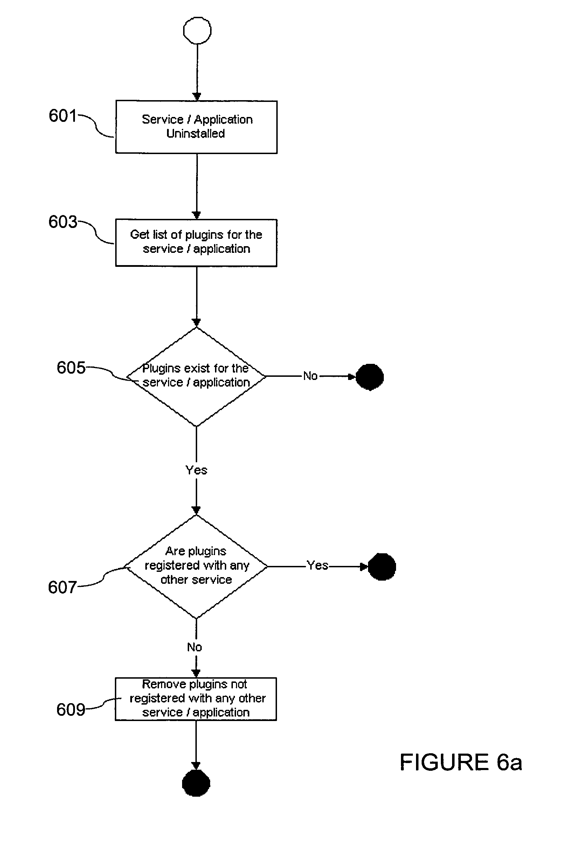

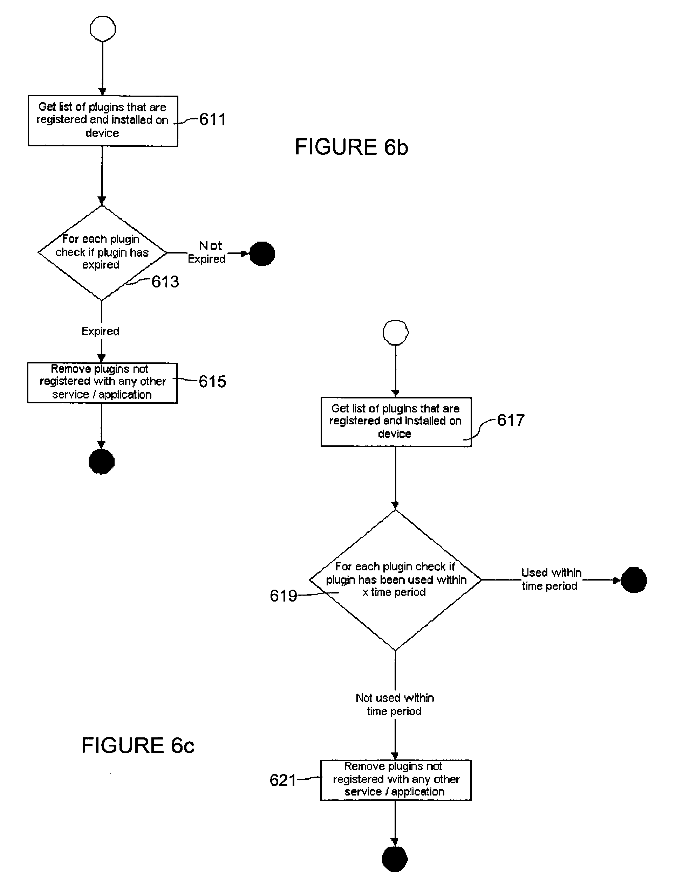

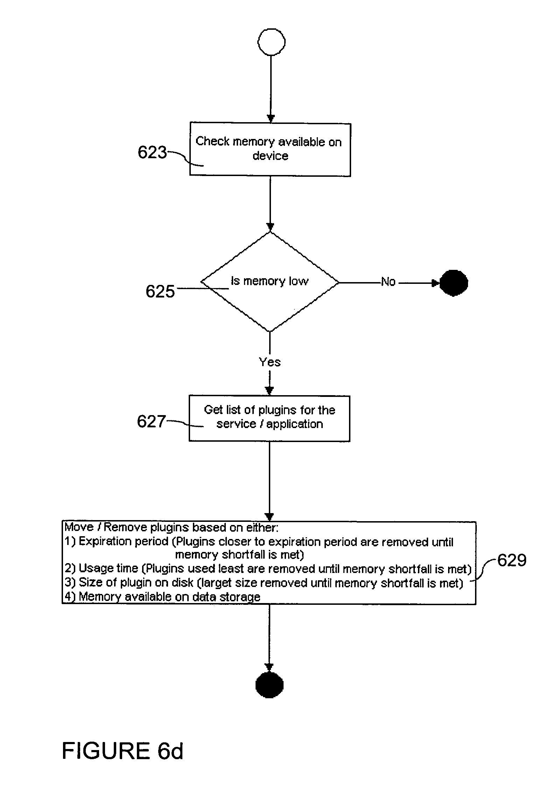

As described above, the framework 301 includes means for managing plugin and API resources in various situations. These situations include when an application is uninstalled, causing the framework to remove those plugins that correspond to the uninstalled application and that are not utilised by any other application as shown by steps 601 - 609 of Figure 6a. In addition, when plugins have expired in relation to a given application, the framework can delete the plugin provided it is not utilised by any other applications as shown by steps 611 - 615 of Figure 6b. Furthermore, when a plugin has not been used within a specified period of time, and when the available memory is low, the framework can delete the plugin provided it is not utilised by any other applications as shown by Figures 6c and 6d. Step 629 of Figure 6d involves the framework 301 stepping through various of the tests shown in Figures 6a - 6c. In each of Figure 6a - 6d the shaded circles indicate the end of the resource management process. The steps shown in Figure 6d could be performed as part of step 513, as described above.

It will therefore be appreciated from the foregoing that a framework according to embodiments of the invention provides a means of achieving dynamic installation of, and updates to, plugins and APIs. The benefits of include high performance in a resource constrained device, due to the fact that the framework 301 is configured to have a low impact on CPU usage. In addition the framework 301 provides efficient memory management, retrieves plugins on-demand and supports re-use between plugins across APIs. The interactions with the remote repository 13, alternatively referred to as a portal service, are optimised by being triggered on-demand from the device 8 or pushed from a service provider or network operator. Since plugins are downloaded in response to requests from users of the device 8, embodiments of the invention provide a mechanism for a personalised handset rather than a standardised handset.

### Additional details and arrangements

The above embodiments describe retrieving plugins in response to selection of a service from an application that accesses data stored on the device 8; in addition or alternatively the framework 301 could be used to download drivers required to enable an application to interact with a chip in the device 8 such as a GPS chip. For example, in the event that a GPS-enabled device 8 is upgraded to include a navigation application such as Tom-Tom^{(™)}, the drivers that are required for the application to communicate with the GPS chip could be downloaded by the framework 301 in the manner described above.

In the above description, layers 101, 103, 105 and the framework 301 have been described in relation to their functionality; the following passages provide example implementations and configurations of these layers and parts:
Part 101 - User Interface (UI) Layer (GUI, Command line etc) - rendering engines within UI layer e.g. a browser application, Flash etc.
Part 107a - This refers to the application that is trying to access the device APIs. In devices running e.g. Symbian^{(™)}, Windows^{(™)} etc operating systems, this could be a widget running within layer 101. In order for the application to access the device APIs (detailed in layer 103), it has to forward the request through the layers 407 and the framework 301. If the application is a native application, then layer 407 is not required as the native application would be able to communicate directly with the Framework 301.
Part 407 - This is the translation layer for the framework 301. The commands that are passed by 107a can be written in some sort of scripting language. The framework 301 is preferably a native application e.g. Symbian^{(™)} C++, Windows^{(™)} Mobile^{(™)} C# etc., and for it to understand the commands sent by application 107a, they have to be converted to the appropriate format. This job is performed by 407. This layer is also written and installed as a native application (e.g. Symbian C++, Windows C#).
Part 301 - This is written and installed as a native application library (e.g. Symbian^{(™)} C++). In addition to comprising components 401, 403 and 405 (described below), it defines an interface that all the plugins in layer 103 need to conform to. This interface allows applications such as 107a to access the functionality of the plugins in layer 103 without having explicit knowledge of how the plugins work, thus making the whole system dynamic. The framework uses a runtime dynamically linked library plugin system. In Symbian based implementation, this utilises ECOM^{(™)} and in Windows this would require the use of COM or similar dynamically linked DLLs.
Part 401 - This is the communication module of the Device Plugin Framework, and is responsible for completing external requests such as downloading plugins from a remote repository. It can achieve this by using the HTTP stack available within a mobile OS (e.g. Windows, Symbian etc). The HTTP stack offers various APIs for requesting web pages/content from external web servers, and is similar to the HTTP stack on an ordinary PC, which also allows browsers and other applications to fetch web pages/content. The communication module can alternatively use other protocols such as TCP/IP or UDP to achieve the same task, as Symbian also provides APIs for sending/receiving such packets.
Part 403 - This is the validation module of the Device Plugin Framework, and is responsible for checking the correctness of the commands sent by application 107a. In a Symbian OS implementation, every plugin (described in 109a) is accompanied by a resource file which can be modified using an editor to list the APIs the plugin conforms to. Symbian^{(™)} also provides mechanisms to open these resource files, and read the data within them without actually instantiating the plugin. The validation module uses this feature of Symbian^{(™)} to read the API information from the resource file, and check it against the command that was sent from the application in 107a.
Part 405 - The dynamic library module is responsible for managing the plugins, and can involve deleting/installing plugins based on memory requirements, usage history etc. For a Symbian^{(™)} implementation the task of installing/deleting is again achieved using system APIs. These APIs allow application (e.g. the device plugin framework) to install/delete other applications without any interference from the user, in other words silently. For other mobile OS (e.g. Windows mobile), this can be achieved by directly overwriting the install files (e.g. dll files).
Part 103 - This is the layer that represents the plugins. These plugins are managed and loaded by the framework 301.
Part 109a - This is a plugin that can be written and installed as native applications (e.g. Symbian^{(™)} C++), and allows applications such as 107a to access system resources through the mechanism described above. Such plugins conform to whatever dynamic plugin mechanism has been used by the framework 301. For example, in the case of Symbian^{(™)} implementations, these are ECOM plugins that implement the defined interface (mentioned in 301).
Part 105 - This refers to the underlying mobile operating system (e.g. Symbian^{(™)}, Windows^{(™)} Mobile^{(™)}, Linux^{(™)} etc).

The above embodiments are to be understood as illustrative examples of the invention. Further embodiments of the invention are envisaged. For example, the framework 301 could be configured for use with wired devices such as a personal computer, a set top box, a Personal Digital Assistant (PDA). It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer-implemented framework for managing software resources processable by a terminal, the terminal being arranged to hold software resources data indicative of a plurality of first type of software resources, a plurality of a second type of software resources and one or more application programming interfaces (API), each said software resource being stored by the terminal such that any given first type of software resource is accessible by a given second type of software component via an API corresponding thereto, wherein the terminal is capable of communicating with devices via a communications network, the framework comprising:
an interface for receiving a first request during processing of a first type of software resource by the terminal, said first request being received from said first type of software resource;
a query component arranged to access the software resources data so as to identify a second type of software resource corresponding to the first request;
resource management means arranged to transmit a second request for a second type of software resource to a device in the communications network and to update said software resources data in response to receipt thereof,
wherein, responsive to the query component indicating absence of a second type of software resource corresponding to the first request, the framework is arranged to transmit a second request for a software resource to a device in the communications network and to update the software resources data held by said terminal in response to receipt of a response message comprising the requested software resource.

2. A computer-implemented framework according to claim 1, wherein said second request comprises a request for said second type of software resource.

3. A computer-implemented framework according to claim 1 or claim 2, wherein the resource management means is arranged to validate the received second type of software resource prior to storing thereof by the terminal.

4. A computer-implemented framework according to claim 3, wherein said response message comprises data identifying an API corresponding to said second type of software resource, and the resource management means is arranged to compare said API corresponding to the second type of software resource with the first request on the basis of said identifying data, whereby to validate the received second type of software component.

5. A computer-implemented framework according to any one of the preceding claims, wherein the framework is arranged to trigger instantiation of the received second type of software component, whereby to continue processing of the said second type of software resource.

6. A computer-implemented framework according to any one of the preceding claims, wherein said second type of software resource comprises a plugin.

7. A computer-implemented framework according to claim 1, wherein said second request comprises a request for an API.

8. A computer-implemented framework according to any one of the preceding claims, wherein the software resources data held by the terminal includes data indicative of usage of a second type of software component by the terminal, and the resource management means is arranged to modify storage of software resources data by the terminal in the event that usage of the given second type of software component is determined to fall below a predetermined threshold.

9. A computer-implemented framework according to claim 8, wherein the resource management means is arranged to configure allocation of memory resources associated with the terminal.

10. A computer-implemented framework according to claim 9, wherein the resource management means is arranged to configure allocation of memory resources in conjunction with said instantiation of the received second type of software component.

11. A computer-implemented framework according to claim 8, wherein the resource management means is arranged to delete a second type of software component from the software resources data held by the terminal.

12. A computer-implemented framework according to any one of the preceding claims, wherein said first type of software resource comprises an application invoked by a content and/or application rendering engine.

13. A computer-implemented framework according to claim 12, wherein the application comprises a browser application.

14. A computer-implemented framework according to claim 12 or claim 13, wherein the framework is in operative association with a third type of software component, said third type of software component being arranged to provide access to said API data via said framework.

15. A computer-implemented framework according to any one of claim 1 to claim 11, wherein said first type of software resource comprises a software resource having direct access to operating system resources associated with the terminal.

16. A computer-implemented framework according to any one of the preceding claims, wherein the framework is further arranged to receive and install software components of the first type.

17. A computer-implemented framework according to any one of the preceding claims, wherein the second request comprises data identifying one or both of operating system components and/or terminal type.

18. A computer-implemented framework according to any one of the preceding claims, wherein the terminal comprises a mobile terminal and the communications network includes a mobile communications network portion.

19. A method of managing software resources that are processable by a terminal, the terminal being arranged to hold software resources data indicative of a plurality of first type of software resources, a plurality of a second type of software resources and one or more application programming interfaces (API), each said software resource being stored by the terminal such that any given first type of software resource is accessible by a given second type of software component via an API corresponding thereto, wherein the terminal is capable of communicating with devices via a communications network, the method comprising:
receiving a first request during processing of a first type of software resource by the terminal, said first request being received from said first type of software resource;
accessing the software resources data so as to identify a second type of software resource corresponding to the first request;
responsive to identification of a second type of software resource corresponding to the first request as being unavailable, transmitting a second request for said second type of software resource to a device in the communications network; and
updating said software resources data in response to receipt of a response message comprising the requested software resource.

20. A method according to claim 19, in which said response message comprises data identifying an API corresponding to said second type of software resource, and the method comprises comparing said API corresponding to the second type of software resource with the first request on the basis of said identifying data.

21. A method according to claim 19 or claim 20, comprising triggering instantiation of the received second type of software component, whereby to continue processing of the said second type of software resource.

22. A method according to claim 21, comprising configuring allocation of memory resources available to the terminal prior to said instantiation of the received second type of software component.

23. A computer program, or a suite of computer programs, program code means being adapted to perform the steps of any one of claim 19 to claim 22 when the program is run on a computer or on a suite of computers..

24. A computer-readable medium having stored thereon a data structure comprising the computer program according to claim 23.
